(19) **Europäisches Patentamt / European Patent Office / Office européen des brevets**

(11) **EP 3 508 551 A1**

(12) **EUROPEAN PATENT APPLICATION**
published in accordance with Art. 153(4) EPC

(43) Date of publication:
**10.07.2019  Bulletin 2019/28**

(21) Application number: **16915197.4**

(22) Date of filing: **02.09.2016**

(51) Int Cl.:
**C09K 5/06** [(2006.01)]    **F28D 20/02** [(2006.01)]

(86) International application number:
**PCT/JP2016/075895**

(87) International publication number:
**WO 2018/042640 (08.03.2018 Gazette 2018/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Hitachi Chemical Company, Ltd.**
**Chiyoda-ku**
**Tokyo 100-6606 (JP)**

(72) Inventors:
- **MORIMOTO, Tsuyoshi**
  **Tokyo 100-6606 (JP)**
- **NAGAI, Akira**
  **Tokyo 100-6606 (JP)**
- **YAMAMOTO, Rei**
  **Tokyo 100-6606 (JP)**

(74) Representative: **Hoffmann Eitle**
**Patent- und Rechtsanwälte PartmbB**
**Arabellastraße 30**
**81925 München (DE)**

(54) **COMPOSITE MEMBER AND PRODUCTION METHOD THEREFOR, HEAT STORAGE MATERIAL AND PRODUCTION METHOD THEREFOR, HEAT-STORAGE-TYPE AIR CONDITIONER, AND HEAT-STORAGE-TYPE HEAT-PIPE-BASED FUELING SYSTEM**

(57)    The present invention provides a composite member comprising a porous body having a first exterior surface, a second exterior surface, and a communication hole communicating with the first exterior surface and the second exterior surface; and an organic material comprising at least one selected from the group consisting of chain saturated hydrocarbon compounds and sugar alcohols, the organic material filling the communication hole, wherein the porous body is formed of a material having a thermal conductivity higher than a thermal conductivity of the organic material.

**Fig.1**

**Description**

**Technical Field**

The present invention relates to a composite member and a manufacturing method therefor, heat storage member and a manufacturing method therefor, a heat-storage-type air conditioner, and a heat-storage-type heat-pipe-based fueling system.

**Background Art**

Saving of energy of living spaces such as a dwelling house and an office is becoming increasingly important every year, and material technology achieving therefore is required. While cooling and heating efficiency of air-conditioning equipment has been improved by using a heat insulating material such as glass wool and urethane foam inside floors, ceilings, walls, etc., for example, materials including heat storage members have been studied for further energy saving. In addition, in vehicles, for example, greater energy saving than ever is given importance with the shift to EV.

Recently, in order to effectively utilize energy in such living environment, latent heat storage materials, which utilize latent heat accompanied by a phase change between a liquid phase and a solid phase, have been used for heat-storage-type air conditioning equipment, heat-storage-type building materials, a variety of heat-retaining instruments or devices, refrigerants, and the like. The way of utilizing latent heat accompanied by a phase change is characterized by being capable of storing a great quantity of heat in a temperature range in which a phase change occurs, by being capable of reducing capacity of heat storage members, by not generating a large temperature difference relative to its amount of heat storage and hence being capable of suppressing heat loss, and so on, and various latent heat storage materials have been suggested as one way of keeping a suitable temperature, heating or cooling.

However, latent heat storage materials have generally low thermal conductivity, and heat is not sufficiently conducted to a position distant from the vicinity of a part contacting a heat source, and hence speed of taking in or out heat is slow. Therefore, latent heat storage materials have to have a relatively thin structure and may have limitation in their application fields. To deal with such problem, as a method for increasing thermal conductivity of latent heat storage materials, a method involving blending an inorganic filler, metal powder, or the like is known. For example, a heat storage member comprising a predetermined latent heat storage material, and a thermal conductive ceramic filler having an average particle size of 0.1 $\mu$m or more and 30 $\mu$m or less, with a content of the thermal conductive ceramic filler being 20% by mass or more and 60% by mass or less based on a total mass is disclosed in Patent Literature 1.

**Citation List**

**Patent Literature**

Patent Literature 1: Japanese Unexamined Patent Publication No. 2015-151433

**Summary of Invention**

**Technical Problem**

However, in the heat storage member disclosed in Patent Literature 1, there is a problem that a content ratio of the latent heat storage material decreases by the amount corresponding to the thermal conductive ceramic filler to be contained, and heat storage capacity decreases.

The present invention has been made in view of the problem concerned, and an object thereof is to provide a heat storage member capable of achieving both heat storage properties and thermal conductivity and a manufacturing method therefor. In addition, another object of the present invention is to provide a composite member suitably used for the heat storage member and a manufacturing method therefor, and a heat-storage-type air conditioner and a heat-storage-type heat-pipe-based fueling system provided with the heat storage member.

**Solution to Problem**

The present inventors have studied to solve the above problems and thereby have found that both heat storage properties and heat conductivity can be achieved by filling an organic material selected from chain saturated hydrocarbon compounds and sugar alcohols into communication holes of a porous body formed of a material having a higher thermal conductivity than the organic material. That is, the present invention provides the following <1> to <14>.

<1> A composite member comprising: a porous body having a first exterior surface, a second exterior surface, and a communication hole communicating with the first exterior surface and the second exterior surface; and an organic material containing at least one selected from the group consisting of chain saturated hydrocarbon compounds and sugar alcohols, the organic material filling the communication hole, wherein the porous body is formed of a material having a thermal conductivity higher than a thermal conductivity of the organic material.

<2> The composite member according to <1>, wherein the material forming the porous body contains at least one selected from the group consisting of carbon, aluminum, copper, and iron.

<3> The composite member according to <1> or <2>, wherein the porous body has a porosity of 80% or more.

<4> The composite member according to any of <1> to <3>, wherein a ratio of the porous body occupying a surface of the composite member is larger than a ratio of the porous body occupying a cross-section inside the composite member.

<5> A method for manufacturing the composite member according to any of <1> to <4>, comprising a filling step of filling the communication hole with the organic material.

<6> The method for manufacturing the composite member according to <5>, further comprising a step of rendering a ratio of the porous body occupying a surface of the composite member obtained by the filling step larger than a ratio of the porous body occupying a cross-section inside the composite member.

<7> A heat storage member comprising: a porous body having a first exterior surface, a second exterior surface, and a communication hole communicating with the first exterior surface and the second exterior surface; and a heat storage material containing at least one selected from the group consisting of chain saturated hydrocarbon compounds and sugar alcohols, the heat storage material filling the communication hole, wherein the porous body is formed of a material having a thermal conductivity higher than a thermal conductivity of the heat storage material.

<8> The heat storage member according to <7>, wherein the material forming the porous body contains at least one selected from the group consisting of carbon, aluminum, copper, and iron.

<9> The heat storage member according to <7> or <8>, wherein the porous body has a porosity of 80% or more.

<10> The heat storage member according to any of <7> to <9>, wherein a ratio of the porous body occupying a surface of the heat storage member is larger than a ratio of the porous body occupying a cross-section inside the heat storage member.

<11> A method for manufacturing the heat storage member according to any of <7> to <10>, comprising a filling step of filling the communication hole with the heat storage material.

<12> The method for manufacturing the heat storage member according to <11>, further comprising a step of rendering a ratio of the porous body occupying a surface of the heat storage member obtained by the filling step larger than a ratio of the porous body occupying a cross-section inside the heat storage member.

<13> A heat-storage-type air conditioner comprising the heat storage member according to any of <7> to <10>.

<14> A heat-storage-type heat-pipe-based fueling system comprising the heat storage member according to any of <7> to <10>.

## Advantageous Effects of Invention

According to the present invention, a heat storage member capable of achieving both heat storage properties and thermal conductivity and a manufacturing method therefor can be provided, and a composite member suitably used for the heat storage member and a manufacturing method therefor, and a heat-storage-type air conditioner and heat-storage-type heat-pipe-based fueling system provided with the heat storage member can be also provided.

## Brief Description of Drawings

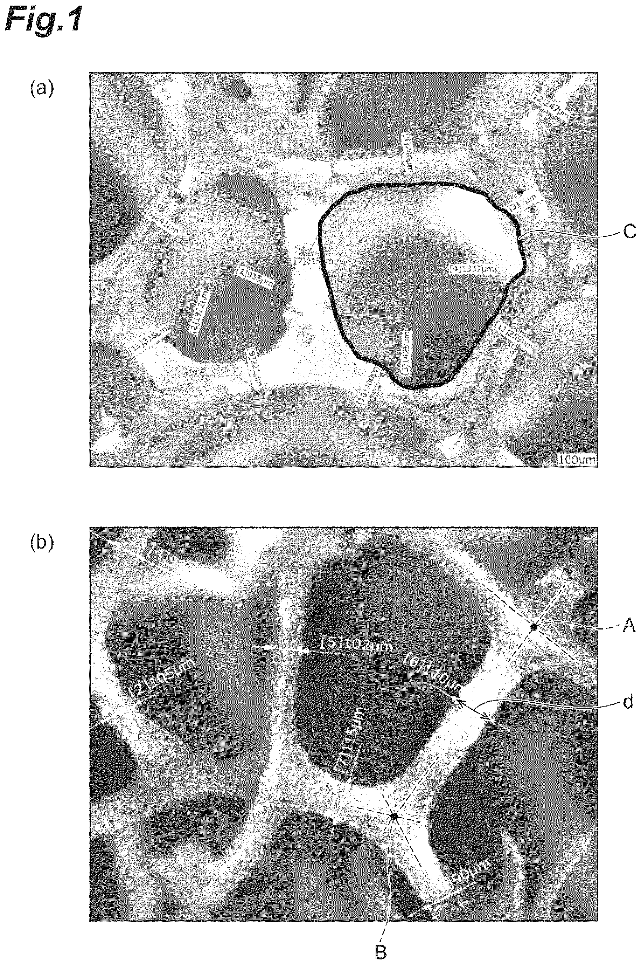

Figure 1 is SEM images explaining diameters of a communication hole and a skeleton.

## Description of Embodiments

Hereinafter, embodiments of the present invention will be described in detail.

A composite member according to the present embodiment comprises a porous body and at least one organic material selected from the group consisting of chain saturated hydrocarbon compounds and sugar alcohols.

The porous body has a first exterior surface, a second exterior surface, and a communication hole communicating with the first exterior surface and the second exterior surface. In other words, the communication hole communicates with a first opening formed on the first exterior surface and a second opening formed on the second exterior surface. The communication hole may communicate with three or more exterior surfaces (openings). The porous body may have a plurality of communication holes which are independent of each other, or may have only one communication hole. In a case where the porous body has only one communication hole, the communication hole may communicate with all openings formed on exterior surfaces of the porous body.

The porosity of the porous body is preferably 80% or more, more preferably 83% or more, and even more preferably 85% or more from the viewpoint of securing a loading of the organic material and further improving heat storage capacity. The porosity of the porous body is preferably 97% or less, more preferably 95% or less, and even more preferably 90% or less from the viewpoint of securing a heat conduction path and allowing for higher thermal conductivity. The porosity of the porous body is preferably 80 to 97%, 80 to 95%, 80 to 90%, 83 to 97%, 83 to 95%, 83 to 90%, 85 to 97%, 85 to 95% or 85 to 90% from the viewpoint of further improving heat storage capacity and allowing for higher thermal conductivity. Porosity is calculated according to the following formula with values of specific gravity ($g/cm^3$) measured respectively for a porous body specimen 1 and a specimen 2 which has the same volume and the same constituent as the porous body specimen 1 but has no pore.

$$\text{Porosity (\%)} = (\text{Specific Gravity of Specimen 2} - \text{Specific Gravity of Specimen 1})/\text{Specific Gravity of Specimen 2} \times 100$$

Such a porous body may be a three-dimensional network structural body constituted by a three-dimensional network skeleton, for example. In this case, a void part formed by the three-dimensional network skeleton corresponds to the communication hole. In the three-dimensional network structural body, more effective conduction of heat is allowed through the skeleton, and generation of a void at the time of filling the communication hole with the organic material is suppressed.

The diameter of the communication hole is preferably 500 to 2000 $\mu$m, more preferably 600 to 1200 $\mu$m, and even more preferably 800 to 1000 $\mu$m. When the diameter of the communication hole is 500 $\mu$m or more, voids can be suitably removed at the time of filling the communication hole with the organic material. When the diameter of the communication hole is 2000 $\mu$m or less, higher thermal conductivity is allowed. The diameter of a communication hole means a value obtained by approximating a void part formed by the skeleton to a circular shape when observing the three-dimensional network structural body with SEM as shown in Figure 1(a) and dividing the outer periphery C thereof by $\pi$, and the diameter of the communication hole is defined as an average value of values measured on five points.

The diameter of the skeleton in the three-dimensional network structural body is preferably 50 to 1000 $\mu$m, more preferably 100 to 250 $\mu$m, and even more preferably 150 to 200 $\mu$m. When the diameter of the skeleton is 50 $\mu$m or more, breakage of the skeleton hardly occurs even when the organic material repeats thermal expansion and thermal contraction. When the diameter of the skeleton is 1000 $\mu$m or less, capacity of the communication hole can be secured, and heat storage effect of the composite member can be further improved. The diameter of a skeleton means a distance d measured as a width of the skeleton at the center position between two points A and B which are intersection points of the skeleton when observing the three-dimensional network structural body with SEM as shown in Figure 1(b), and the diameter of the skeleton is defined as an average value of distances d measured on 30 points.

The porous body is formed of a material having a thermal conductivity higher than a thermal conductivity of the organic material. Incidentally, the thermal conductivity of the organic material is thermal conductivity at a solid state. The material forming the porous body has a thermal conductivity of 100 w/mK or more, for example. Thermal conductivity is measured by a steady-state method by heat-flow meter technique complying with American Standard ASTM E1530.

The material forming the porous body may be an inorganic material, for example. The material forming the porous body contains at least one selected from carbon, aluminum, copper, and iron, for example. More specifically, the porous body may be a three-dimensional network structural body having a three-dimensional network skeleton formed of a fiber of pitch-based carbon fibers, PAN-based carbon fibers, SWCNT, MWCNT, copper, aluminum, titanium, nickel, iron, and stainless steel, for example. Such a three-dimensional network structural body is obtained by a wet sheet-forming method in which fibers are dispersed in a dispersion medium such as water and polyvinyl alcohol, formed into a sheet, and then dried; and a dry sheet-forming method in which fibers with an adhesive added thereto are dried to form a network structure on a mesh while being suspended and dispersed in air, for example.

The three-dimensional network structural body can also be obtained by allowing inorganic material powder to adhere to a surface of a porous base and to be carried thereby, for example. As this base should eventually be thermally decomposed and dissipated, this base is constituted by a resin. A polyurethane foam is most commonly used as the base, but other foams such as silicone resin foam and polyester resin foam may also be used.

The following various conventional methods may be applied to allow the inorganic material to adhere to the base.

The wet method is a method in which a dispersion liquid with inorganic material powder dispersed in a dispersion medium is prepared, the base is immersed in this dispersion liquid, and then the base is dried. A solution in which a binder is dissolved in a solvent may be used as the dispersion medium, with a volatile liquid such as alcohols or water used as the solvent. In this case, a dispersant may be added to the dispersion medium to prevent the powder from precipitating. A solution of an organic polymer such as phenol resin may be used as the dispersion medium.

The dry method is a method in which a solution of a tacky adhesive such as acrylic and rubber-based tacky adhesives or a solution of adhesive resin such as phenol resin, epoxy resin, and furan resin is applied to the base surface so as to impart tackiness thereto, and the powder is allowed to adhere to the base surface by means for shaking the base in the powder, splaying the powder on the base or the like.

Subsequently, the base with the inorganic material adhered thereon is heated to the melting point of the inorganic material or higher in a non-oxidizing atmosphere. The resin base is decomposed, removed and dissipated during this process of raising the temperature to the melting point.

The three-dimensional network structure of the porous body obtained by the above manufacturing method holds the three-dimensional network structure of the resin base as it is. Accordingly, the three-dimensional network structure (an entire porosity of the porous body, a size of the diameter of the communication hole, and the like) of the porous body can be adjusted to a desired one by changing the three-dimensional network structure of the resin base.

A ratio of the porous body occupying the composite member is preferably 3% by volume or more, more preferably 5% by volume or more, and even more preferably 10% by volume or more based on the total volume of the composite member from the viewpoint of securing a heat conduction path and allowing for higher thermal conductivity. The ratio of the porous body occupying the composite member is preferably 20% by volume or less, more preferably 17% by volume or less, and even more preferably 15% by volume or less based on the total volume of the composite member from the viewpoint of securing a loading of the organic material and further improving heat storage capacity. The ratio of the porous body occupying the composite member is preferably 3 to 20% by volume, 3 to 17% by volume, 3 to 15% by volume, 5 to 20% by volume, 5 to 17% by volume, 5 to 15% by volume, 10 to 20% by volume, 10 to 17% by volume, or 10 to 15% by volume based on the total volume of the composite member from the viewpoint of further improving heat storage capacity and allowing for higher thermal conductivity.

The communication hole of the porous body is filled with the organic material. The organic material includes chain saturated hydrocarbon compounds and sugar alcohols. These organic materials may be used singly or in combinations of two or more.

The chain saturated hydrocarbon compounds (hereinafter simply referred to as "hydrocarbon compounds") may be linear or branched. The hydrocarbon compounds have a melting point in the range of, for example, -10 to 100°C from the viewpoint of obtaining practicable heat storage effect. Specific examples of such hydrocarbon compounds include n-dodecane (C12, -10°C), n-tridecane (C13, -5°C), n-tetradecane (C14, 6°C), n-pentadecane (C15, 9°C), n-hexadecane (C16, 18°C), n-heptadecane (C17, 21°C), n-octadecane (Cl8, 28°C), n-nonadecane (C19, 32°C), n-eicosane (C20, 37°C), n-heneicosane (C21, 41°C), n-docosane (C22, 46°C), n-tricosane (C23, 47°C), n-tetracosane (C24, 50°C), n-pentacosane (C25, 54°C), n-hexacosane (C26, 56°C), n-heptacosane (C27, 60°C), n-octacosane (C28, 65°C), n-nonacosane (C29, 66°C), n-triacontane (C30, 67°C), n-tetracontane (C40, 81°C), n-pentacontane (C50, 91°C), n-hexacontane (C60, 98°C). Incidentally, the values in the parentheses along with respective specific examples indicate carbon numbers and melting points, respectively.

The organic material may be petroleum wax composed mainly of linear saturated hydrocarbon compounds. Petroleum wax is a substance separated and purified from a component of reduced-pressure distillation of a raw material that is petroleum or natural gas. Specific examples of the petroleum wax include Paraffin Wax (48 to 69°C (melting point, the same hereinafter.)), HNP (64 to 77°C), SP (60 to 74°C), and EMW (49°C) manufactured by Nippon Seiro Co., Ltd. The above described hydrocarbon compounds may be used singly or in combinations of two or more.

The sugar alcohol is a compound having a melting point in the range of, for example, 80 to 200°C from the viewpoint of obtaining practicable heat storage effect. Specific examples of the sugar alcohols include threitol (89°C (melting point, the same hereinafter.)), xylitol (94°C), sorbitol (106°C), erythritol (121°C), allitol (150°C), mannitol (167°C), galactitol (182°C). These sugar alcohols may be used singly or in combinations of two or more.

A ratio of the organic material occupying the composite member is preferably 80% by volume or more, more preferably 83% by volume or more, and even more preferably 85% by volume or more based on the total volume of the composite member from the viewpoint of further improving heat storage capacity. The ratio of the organic material occupying the composite member is preferably 97% by volume or less, more preferably 95% by volume or less, and even more preferably 90% by volume or less based on the total volume of the composite member from the viewpoint of securing a heat conduction path and allowing for higher thermal conductivity. The ratio of the organic material occupying the composite member is preferably 80 to 97% by volume, 80 to 95% by volume, 80 to 90% by volume, 83 to 97% by volume, 83 to 95% by volume, 83 to 90% by volume, 85 to 97% by volume, 85 to 95% by volume, or 85 to 90% by volume based on the total volume of the composite member from the viewpoint of further improving heat storage capacity and allowing for higher thermal conductivity.

The composite member may further comprise a silane coupling agent, inorganic or organic particles, and the like in addition to the porous body and the organic material. A silane coupling agent is suitably used to improve adhesion between the porous body surface and the organic material, for example. Inorganic particles are suitably used for adjustment of viscosity when the organic material liquefies and for higher thermal conductivity. The inorganic particles may be particles formed of silica, alumina, boron nitride, aluminum nitride, or the like.

In a composite member according to one embodiment, a ratio of the porous body occupying a surface of the composite member is larger than a ratio of the porous body occupying a cross-section inside the composite member. According to this composite member, since a surface with a larger ratio of the porous body is allowed to contact with a heat source, heat conduction to the whole composite member can be more suitably realized.

The composite member is, for example, obtained by a manufacturing method comprising a filling step of filling the organic material to the communication hole of the porous body. In the filling step, filling is performed by immersing the porous body in the organic material having been liquefied, for example.

The manufacturing method for the composite member may further comprise a step of rendering a ratio of the porous body occupying a surface of the composite member obtained by the filling step larger than a ratio of the porous body occupying a cross-section inside the composite member. Thereby, a composite member in which the ratio of the porous body occupying a surface of the composite member is larger than the ratio of the porous body occupying a cross-section inside the composite member as described above is obtained. In this step, one or more surfaces of the composite member obtained by the filling step are polished, for example.

In the composite member described above, a heat conduction path is secured by the porous body with a high thermal conductivity while the organic material stores heat. At this time, thermal conductivity is suitably maintained even when the ratio of the organic material is increased by decreasing the ratio of the porous body occupying the composite member from the viewpoint of heat storage properties, because the porous body is capable of forming a continuous heat conduction path by itself. Accordingly, both heat storage properties and heat conductivity can be achieved.

As described above, the composite member comprises the organic material useful as a heat storage material and hence is suitably used as a heat storage member. Accordingly, in the above descriptions, the "composite member" and the "organic material" can be replaced by "heat storage member" and "heat storage material," respectively. That is, a heat storage member according to one embodiment comprises a porous body having a first exterior surface, a second exterior surface, and a communication hole communicating with the first exterior surface and the second exterior surface; and a heat storage material containing at least one selected from the group consisting of chain saturated hydrocarbon compounds and sugar alcohols, the heat storage material filling the communication hole, wherein the porous body is formed of a material having a thermal conductivity higher than a thermal conductivity of the heat storage material.

As the heat storage member (composite member) according to the present embodiment has high heat conduction efficiency, a shape of the heat storage member can be made large in thickness, and even if the heat storage member is miniaturized in various applications, the heat storage member can provide equivalent properties.

The heat storage member is used for a heat-storage-type air conditioner, a heat-storage-type heat-pipe-based fueling system, a building structural material for a dwelling house, a building, etc., and preservation of medicaments or food, for example.

The heat-storage-type air conditioner is not particularly limited as long as it is an air conditioner using an exterior heat exchanger and a heat storage tank as heat source equipment for air conditioning of a dwelling house, a building, a store such as a convenience store. The heat storage member is used for the heat storage tank in such a heat-storage-type air conditioner.

The heat-storage-type heat-pipe-based fueling system is not particularly limited as long as it is hot-water supply equipment employing a system in which hot-water is obtained by supplying heat that the heat storage body holds to water via a heat pipe. The heat storage member is used so as to cover the heat pipe in such a heat-storage-type heat-pipe-based fueling system.

The building structural material is not particularly limited as long as it has a configuration in which a ceiling member, a wall member, a floor member or the like for a dwelling house, a building, etc. has the heat storage member. In a case where the heat storage member is used for preservation of medicaments or food, specific use modes thereof are not particularly limited as long as the mode is capable of suppressing a change in temperature during preservation and transportation of medicaments or food and keeping the medicaments or food at an appropriate temperature.

## Examples

Hereinafter, the present invention will be described more specifically based on Examples, but the present invention is not limited to the following Examples.

(Examples 1 to 3)

Paraffin Wax HNP-3 (melting point: 64°C, thermal conductivity in solid state: 0.2 W/mK), HNP-9 (melting point: 75°C, thermal conductivity in solid state: 0.2 W/mK) manufactured by Nippon Seiro Co., Ltd., and xylitol (melting point: 94°C, thermal conductivity in solid state: 0.2 W/mK) were used as organic materials (heat storage materials), each of them was melted on a hot plate set at 100°C, and a porous metal HC15 (manufactured by Hitachi Chemical Co., Ltd., porosity: 97%, thermal conductivity of aluminum: 236 W/mK), which was a porous body made of pure aluminum, was immersed in each of the organic materials (heat storage material). The organic materials (heat storage materials) and the porous metal were defoamed with a vacuum dryer, took out from the vacuum dryer, and then left to cool to room temperature. This composite member of the porous metal (porous body) and the organic material (heat storage material) was made to have a rectangular shape with a size of 10 mm × 10 mm × 1 mm by polishing all six surfaces thereof using a polishing paper of #800.

(Comparative Examples 1 to 3)

Paraffin Wax HNP-9 (melting point: 75°C) manufactured by Nippon Seiro Co., Ltd. was melted on a hot plate set at 100°C, and aluminum powder (manufactured by Kojundo Chemical Laboratory Co., Ltd.) was added thereto in a mass equivalent to 3% by volume, 10% by volume, and 20% by volume. The resultant mixture was stirred sufficiently and then rapidly cooled with ice water. This composite member of the aluminum powder and the paraffin wax was made to have a rectangular shape with a size of 10 mm × 10 mm × 1 mm by polishing all six surfaces thereof using a polishing paper of #800.

(Comparative Example 4)

Paraffin Wax HNP-9 (melting point: 75°C) manufactured by Nippon Seiro Co., Ltd. was made to have a rectangular shape with a size of 10 mm × 10 mm × 1 mm by polishing all six surfaces thereof using a polishing paper of #800.

(Measurement of Thermal Conductivity)

Thermal conductivity (W/mK) of each of the obtained composite members was measured by a steady-state method by heat-flow meter technique complying with American Standard ASTM E1530.

(Measurement of Heat of Fusion)

Heat of fusion (J/g) of each of the obtained composite members was measured under a condition with temperature rise rate of 10°C/min. using a differential scanning calorimetry apparatus (DSC 8500, manufactured by PerkinElmer Inc.)
The constitutions and the measurement results of thermal conductivity and heat of fusion of the respective composite members are shown in Table 1. Incidentally, the constitutions of the composite members of Examples 1 to 3 are shown by "% by volume" converted from the porosity of the porous metal.

[Table 1]

| | | Example 1 | Example 2 | Example 3 | Comparative Example 1 | Comparative Example 2 | Comparative Example 3 | Comparative Example 4 | Comparative Example 5 |
|---|---|---|---|---|---|---|---|---|---|
| Constitution (% by volume) | HNP-3 | 97 | - | - | - | - | - | 100 | - |
| | HNP-9 | - | 97 | - | 97 | 90 | 80 | - | - |
| | Xylitol | - | - | 97 | - | - | - | - | 100 |
| | HC-15 | 3 | 3 | 3 | - | - | - | - | - |
| | Al powder | - | - | - | 3 | 10 | 20 | - | - |
| Thermal conductivity (W/mK) | | 2.1 | 2.2 | 2.3 | 0.2 | 0.2 | 0.4 | 0.2 | 0.2 |
| Heat of fusion (J/g) | | 175.9 | 183.8 | 216.5 | - | - | - | 206.9 | 246.5 |

As is clear from the above table, the composite members (heat storage members) of the present invention are superior in both thermal conductivity and heat storage properties compared to Comparative Examples. Therefore, these composite members (heat storage members) can suitably contribute to maintaining an appropriate room temperature in a dwelling house, etc., utilization of exhaust heat, and the like, and are useful for saving of energy.

**Claims**

1.   A composite member comprising:

   a porous body having a first exterior surface, a second exterior surface, and a communication hole communicating with the first exterior surface and the second exterior surface; and
   an organic material comprising at least one selected from the group consisting of chain saturated hydrocarbon compounds and sugar alcohols, the organic material filling the communication hole,
   wherein the porous body is formed of a material having a thermal conductivity higher than a thermal conductivity of the organic material.

2.   The composite member according to claim 1, wherein the material forming the porous body comprises at least one selected from the group consisting of carbon, aluminum, copper, and iron.

3.   The composite member according to claim 1 or 2, wherein the porous body has a porosity of 80% or more.

4.   The composite member according to any one of claims 1 to 3, wherein a ratio of the porous body occupying a surface of the composite member is larger than a ratio of the porous body occupying a cross-section inside the composite member.

5.   A method for manufacturing the composite member according to any one of claims 1 to 4, comprising a filling step of filling the communication hole with the organic material.

6.   The method for manufacturing the composite member according to claim 5, further comprising a step of rendering a ratio of the porous body occupying a surface of the composite member obtained by the filling step larger than a ratio of the porous body occupying a cross-section inside the composite member.

7.   A heat storage member comprising:

   a porous body having a first exterior surface, a second exterior surface, and a communication hole communicating with the first exterior surface and the second exterior surface; and
   a heat storage material comprising at least one selected from the group consisting of chain saturated hydrocarbon compounds and sugar alcohols, the heat storage material filling the communication hole,
   wherein the porous body is formed of a material having a thermal conductivity higher than a thermal conductivity of the heat storage material.

8.   The heat storage member according to claim 7, wherein the material forming the porous body comprises at least one selected from the group consisting of carbon, aluminum, copper, and iron.

9.   The heat storage member according to claim 7 or 8, wherein the porous body has a porosity of 80% or more.

10.   The heat storage member according to any one of claims 7 to 9, wherein a ratio of the porous body occupying a surface of the heat storage member is larger than a ratio of the porous body occupying a cross-section inside the heat storage member.

11.   A method for manufacturing the heat storage member according to any one of claims 7 to 10, comprising a filling step of filling the communication hole with the heat storage material.

12.   The method for manufacturing the heat storage member according to claim 11, further comprising a step of rendering a ratio of the porous body occupying a surface of the heat storage member obtained by the filling step larger than a ratio of the porous body occupying a cross-section inside the heat storage member.

**13.** A heat-storage-type air conditioner comprising the heat storage member according to any one of claims 7 to 10.

**14.** A heat-storage-type heat-pipe-based fueling system comprising the heat storage member according to any one of claims 7 to 10.

# *Fig.1*

(a)

(b)

## INTERNATIONAL SEARCH REPORT

International application No.

PCT/JP2016/075895

### A. CLASSIFICATION OF SUBJECT MATTER
C09K5/06(2006.01)i, F28D20/02(2006.01)i

According to International Patent Classification (IPC) or to both national classification and IPC

### B. FIELDS SEARCHED

Minimum documentation searched (classification system followed by classification symbols)
C09K5/06, F28D20/02

Documentation searched other than minimum documentation to the extent that such documents are included in the fields searched
Jitsuyo Shinan Koho        1922–1996   Jitsuyo Shinan Toroku Koho   1996–2016
Kokai Jitsuyo Shinan Koho  1971–2016   Toroku Jitsuyo Shinan Koho   1994–2016

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2005-330484 A  (SGL Carbon AG.), 02 December 2005 (02.12.2005), claims 1 to 22; paragraphs [0022] to [0023], [0029]; examples & US 2005/0258394 A1 claims 1 to 24; paragraphs [0026] to [0027], [0035] to [0036]; examples & EP 1598406 A1        & CA 2507476 A & KR 10-2006-0047958 A   & CN 1699497 A | 1-14 |
| X | JP 2010-151419 A  (Sumitomo Electric Industries, Ltd.), 08 July 2010 (08.07.2010), claims 1 to 10; paragraphs [0019] to [0021], [0038] to [0053]; fig. 1 to 9 (Family: none) | 1-14 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 September 2016 (30.09.16) | 11 October 2016 (11.10.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

| International application No. |
|---|
| PCT/JP2016/075895 |

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2004-149796 A  (SGL Carbon AG.),<br>27 May 2004 (27.05.2004),<br>claims 1 to 11; paragraphs [0023] to [0024];<br>example 3<br>& US 2004/0084658 A1<br>claims 1 to 13; paragraphs [0024] to [0025];<br>example 3<br>& EP 1416027 A1          & DE 10250249 A<br>& NO 20034822 A | 1-14 |
| X | JP 2002-530615 A  (UT-Battelle, L.L.C.),<br>17 September 2002 (17.09.2002),<br>claims 1 to 55; paragraphs [0005] to [0006];<br>examples 2, 4; fig. 4 to 16B<br>& WO 1999/064223 A1<br>claims 1 to 55; page 2, lines 3 to 28; examples<br>2, 4; fig. 4 to 16B<br>& US 6037032 A          & EP 1165457 A1<br>& AU 3742699 A          & BR 9911000 A<br>& CA 2334583 A          & NZ 508568 A<br>& KR 10-2006-0009389 A  & MX PA04011526 A | 1-14 |
| X | JP 2006-328143 A  (Hitachi Chemical Co., Ltd.),<br>07 December 2006 (07.12.2006),<br>claims 1 to 13; paragraphs [0011] to [0012];<br>examples<br>(Family: none) | 1-14 |
| X | JP 2000-292085 A  (Chubu Electric Power Co.,<br>Inc.),<br>20 October 2000 (20.10.2000),<br>claims 1 to 8; paragraphs [0024], [0026]<br>(Family: none) | 1-14 |
| X | JP 5-1281 A  (Matsushita Electric Works, Ltd.),<br>08 January 1993 (08.01.1993),<br>claim 1; paragraphs [0007], [0009], [0015];<br>examples 1 to 2; fig. 1 to 2<br>(Family: none) | 1-14 |
| X | JP 2001-214158 A  (Matsushita Electric<br>Industrial Co., Ltd.),<br>07 August 2001 (07.08.2001),<br>claim 3; example 2<br>(Family: none) | 1-14 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

•   JP 2015151433 A